(19) Europäisches Patentamt
European Patent Office
Office européen des brevets

(11) Publication number: 0 590 423 A2

## EUROPEAN PATENT APPLICATION

(21) Application number: 93114915.7

(22) Date of filing: 16.09.93

(51) Int. Cl.⁵: C08L 21/00, C08K 5/09, C08K 5/14

(30) Priority: 02.10.92 JP 264762/92

(43) Date of publication of application:
06.04.94 Bulletin 94/14

(84) Designated Contracting States:
DE FR GB IT

(71) Applicant: BANDO CHEMICAL INDUSTRIES, LIMITED
2-15, Meiwa-dori 3-chome
Hyogo-ku Kobe-shi(JP)

(72) Inventor: Hamano, Naoki, c/o Bando Chemical Industries, Ltd.
2-15, Meiwa-dori 3-chome
Hyogo-ku, Kobe-shi(JP)

(74) Representative: Gauger, Hans-Peter, Dipl.-Ing.
Müller, Schupfner & Gauger
Postfach 10 11 61
D-80085 München (DE)

(54) Process for producing vulcanized rubber composition.

(57) A process of producing an improved vulcanized rubber composition is disclosed. In this process, an unvulcanized rubber composition containing 100 parts by weight of a sulphur vulcanizable rubber; 10 to 100 parts by weight of a metal salt of an unsaturated carboxylic acid; 0.2 to 5.0 parts by weight of an organic peroxide whose half-life is 1 minute at above 170 °C; and 0.5 to 3.0 parts by weight of a sulphur component, per 100 parts by weight of the sulphur vulcanizable rubber is first heated in a lower-temperature range within which the organic peroxide does not decompose. Following the above heating, the composition is continuously heated in a higher-temperature range within which the organic peroxide decomposes. Owing to this two-stage continuous vulcanization, a vulcanized rubber composition having high strength, high elasticity, and high flex fatigue resistance is obtained.

EP 0 590 423 A2

Rank Xerox (UK) Business Services
(3.10/3.09/3.3.4)

## BACKGROUND OF THE INVENTION

This invention relates to a process for producing a vulcanized rubber composition that has high strength, high elasticity, and high flex fatigue resistance.

It is common knowledge that a rubber-zinc dimethacrylate mixture (or a rubber-basic zinc methacrylate mixture) comes to have a higher strength when cross-linked by organic peroxide. Several examples are described in the following official gazettes.

U.S. Patent No. 1,091,818 shows that an ethylene propylene type rubber-dimethacrylic acid's metal salt mixture comes to have a higher strength when cross-linked by organic peroxide.

U.K. Patent No. 159477 is an invention in golf balls whose cores are formed by means of vulcanization of a polybutadiene rubber-basic zinc methacrylate mixture by radial initiators.

JP Patent Application, published under No. 59-149938, teaches that a composition, containing a natural rubber, a conjugated diene rubber, zinc dimethacrylate whose surface area is about 3.7 $m^2$/g to about 5.4 $m^2$/g, inorganic fillers, and vulcanizing agents of organic peroxide, has an excellent strength.

JP Patent Application, published under No. 60-92237 pertains to a process of producing zinc dimethacrylate whose surface area is about 3.7 $m^2$/g to about 5.4 $m^2$/g. This prior art technique discloses a high-strength vulcanized rubber composition as a result of hardening a rubber-zinc dimethacrylate mixture by peroxide.

JP Patent Applications, published under Nos. 1-306440, 1-306441, and 1-306443, each show that rubber, mixed with zinc methacrylate containing not more than 5% rough particles with a size of not less than 20 $\mu$m, has a higher strength when cross-linked by organic peroxide alone.

The foregoing prior art techniques, however, have several disadvantages. The tensile strength and elongation of rubber compositions in accordance with U.S. Patent No. 1,091,818 and U.K. Patent No. 159477 is not preferable. These prior art rubber compositions suffer from unsatisfactory flex fatigue resistance, which is because that their cross-linking structure is established by carbon-to-carbon bonds.

In sulphur-addition systems, such an additive serves only as a co-cross-linker. This results in the decrease in compression set.

## SUMMARY OF THE INVENTION

The present invention was made in an effort to overcome the problems described above. In the present invention, the timing of vulcanization is adequately determined so as to produce vulcanized rubber compositions which have preferable properties and characteristics.

The present invention discloses a process of producing a vulcanized rubber composition. In this process, at Step A an unvulcanized rubber composition, which consists essentially of: (1) 100 parts by weight of a sulphur vulcanizable rubber; (2) 10 to 100 parts by weight of a metal salt of unsaturated carboxylic acid; (3) 0.2 to 5.0 parts by weight of organic peroxide whose half-life period is 1 minute at temperatures above 170 °C; and (4) 0.5 to 3.0 parts by weight of a sulphur component, per 100 parts of the sulphur vulcanizable rubber, is heated in a lower-temperature range within which the organic peroxide does not decompose, and at Step B the unvulcanized rubber composition heated at Step A is continuously heated in a higher-temperature range within which the organic peroxide decomposes. In this way, a vulcanized rubber composition is produced.

It is preferable to use as a matrix rubber a hydrogenated rubber composed of ethylene unsaturated nitrile-conjugated diene type copolymers. When employing such a hydrogenated rubber, the ratio of hydrogenated rubber to unsaturated carboxylic acid's metal salt is preferably determined by the following formula:

$$100/100 \geqq R/S \geqq 100/15$$

where R is the hydrogenated rubber and S is the unsaturated carboxylic acid's metal salt.

It is preferable to carry out the first heating treatment of Step A at low temperatures from 130°C to 145°C and the second heating treatment of Step B at high temperatures from 160°C to 180°C.

A chemical reaction of sulphur with matrix rubber causes cross-linking of the polymer chains. The organic peroxide then decomposes and the metal salt of the unsaturated carboxylic acid polymerizes.

Vulcanized rubber compositions as a result of the above-described continuous two-stage vulcanization have high strength, high elasticity, and high flex fatigue resistance.

2

**BRIEF DESCRIPTION OF THE DRAWING**

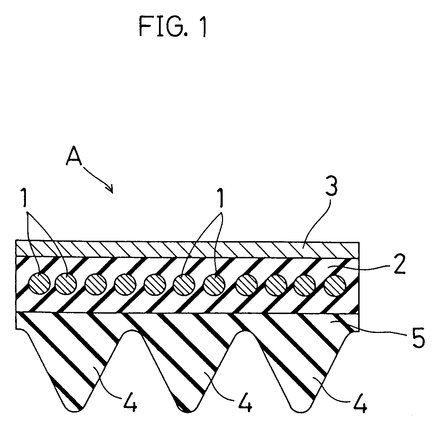

Figure 1 is an illustrative view of a V-ribbed belt.

**DESCRIPTION OF THE INVENTION**

An unvulcanized rubber component is first prepared, which contains; 100 parts of a sulphur vulcanizable rubber; 10 to 100 parts by weight of a metal salt of an unsaturated carboxylic acid; 0.2 to 5.0 parts by weight of an organic peroxide whose half-life period is 1 minute at temperatures above 170 °C; and 0.5 to 3.0 parts of a sulphur component, per 100 parts of the sulphur vulcanizable rubber.

Typical examples of sulphur vulcanizable rubbers are natural rubbers (NR), acrylonitrile butadiene rubbers (NBR), styrene butadiene rubbers (SBR), ethylene propylene diene terpolymers (EPDM), and hydrogenated rubbers composed of ethylene unsaturated nitrile-conjugated diene type copolymers.

Hydrogenated rubbers are obtained by polymerizing ethylene unsaturated nitrile (for example, acrylonitrile and methacrylonitrile) and conjugated diene (for example, 1,3-butadiene, isoprene, and 1,3-isoprene), by adding hydrogen to a resulting copolymer, and by saturating double bonding that is present in conjugated diene monomeric units. For instance, hydrogen-addition acrylonitrile butadiene rubber is known (hereinafter abbreviated H-NBR). Taking this H-NBR for example, the percentage of the acrylonitrile rubber monomeric unit is limited to 10 to 60% by weight while on the other hand the percentage of the conjugated diene monomeric unit is limited to not more than 30% by weight by means of partial hydrogenation. With regard to H-NBR, none of its molecular weight, glass transition temperature, and hydrogenation rate are limited to particular values. The hydrogenation rate for existing double bonding in a conjugated diene monomeric unit, however, is generally 10% to 99%, preferably 80% to 95%.

A unsaturated carboxylic acid' metal salt results from the ionic bond between an unsaturated carboxylic acid having a carboxyl group and a metal. Zinc acrylate, zinc methacrylate, and the like are preferable. The content of such a metal salt is limited to 10 to 100 parts by weight per 100 parts by weight of a hydrogenated rubber, the reason for which is that, if the content goes beyond that limit, resulting vulcanized compositions will not have better effects than expected. Additionally, the preferable ratio of hydrogenated rubber to unsaturated carboxylic acid's metal salt is:

$$100/100 \geq R/S \geq 100/15$$

where R is the hydrogenated rubber and S is the unsaturated carboxylic acid's metal salt. The reason for this is that, if the ratio is below 100/15, the strength characteristics will be degraded. If the ratio exceeds a ratio of 100/100, both the flex fatigue resistance and the bounce impact elasticity become poor and the increase in hardness becomes great.

Monomeric units of an unsaturated carboxylic acid's metal salt polymerize owing to organic peroxides. Typical examples of organic peroxides with a half-life period of 1 minute at temperatures of above 170°C are dicumyl peroxide; 2,5-Dimethyl-2,5-di(t-butylperoxy) hexane; $\alpha$, $\alpha$-Bis(butylperoxy-m-isopropyl) benzene; Di-t-butyl peroxide; 2,5-Dimethylhexane-2,5-di(t-butylperoxy) hexane-3; Di-isopropylbenzene; hydroperoxide; and p-Menthane hydroperoxide.

The reason that a particular organic peroxide with a half-life period of 1 minute at above 170°C is employed here is to avoid the decomposition of the organic peroxide due to the vulcanization of a matrix rubber with sulphur at temperatures below 170 °C. If such decomposition takes place, radicals generated are incorporated into the sulphur. This leads to vulcanization inhibition. The cross-linking density of the vulcanized rubber decreases and the polymerization of the unsaturated carboxylic acid's metal salt is interrupted. These organic peroxides are used alone or in combination.

The reason that the content of an unsaturated carboxylic acid's metal salt is limited to 0.2 to 5.0 parts by weight per 100 parts by weight of a matrix rubber is that, if the content is below 1/5 of a part by weight, this causes insufficient polymerization. The metal salt, therefore, is left in the form of a monomer. The rise in temperature causes ion dissociation to take place, leading to the degradation in physical properties. If the content exceeds 5.0 parts by weight, this will present a problem at the time of vulcanizing a matrix rubber with sulphur.

A sulphur component as a vulcanizing agent is a sulphur compound or a sulphur and sulphur-compound mixture. The reason that the content of a sulphur component is limited to 0.5 to 3.0 parts by weight per 100 parts by weight of a matrix rubber is that, if the content is below 1/2 of a part by weight, the vulcanization proceeds insufficiency, leading to the decrease in strength and elasticity characteristics. If the content exceeds 3.0 parts by weight, this results in poor compression set.

Generally, unvulcanized rubber components are kneaded by means of a roll, a Banbury mixer, or a kneader. Such an unvulcanized component contains several different types of additives, in addition to the foregoing components. For example, carbon black, silica, and the like are used as reinforcers. Calcium carbonate, talc, and the like are used as fillers. Triallyl isocyanurate, trimethylolpropane triacrylate, m-phenylenebismaleimide, and the like are used as accelerator activators. Vulcanization accelerators, plasticizers, stabilizers, processing adjuvants, too, are used as required.

The above-described unvulcanized rubber component is heated in a higher-temperature range within which the organic peroxide does not decompose, thereby causing cross-linking of the polymer chains by the sulphur.

Following the above, the component is continuously heated in a higher-temperature range within which organic peroxide decomposes, without the change in pressure during the heating process. In this way, vulcanized rubber components are obtained. The decomposition of the organic peroxide causes the unsaturated carboxylic acid's metal salt to polymerize.

The reason for the continuous vulcanization from a lower-temperature range to a higher-temperature range without the change in pressure is that, if the entire vulcanization is carried out at low temperatures, the polymerization of the metal salt does not take place due to the decomposition of the organic peroxide and the metal salt results in being left in the form of a monomer. Because of this, a vulcanized rubber composition having a high strength cannot be obtained. Additionally, the dissociation of ions of the unsaturated carboxylic acid and ions of the metal salt will take place at high temperatures. This means the decrease in physical property at high temperatures. Conversely, if the entire vulcanization is carried out at high temperatures, sulphur incorporates radicals generated when the organic peroxide discomposes. This causes vulcanization inhibition, and high elasticity cannot be obtained. By "a lower-temperature range", what is meant is a temperature range within which sulphur vulcanization is possible and little or no organic peroxide decomposition takes place (i.e. 130°C to 145°C). By "a higher-temperature range", what is meant is a temperature range within which organic peroxide decomposition occurs (i.e. 160 °C to 180 °C).

**EXAMPLE 1**

A vulcanized rubber sheet was obtained by kneading an H-NBR composition as shown in Table 1 by a Banbury mixer and by subjecting it to the process of press cure under vulcanization conditions of Table 1. The properties of this vulcanized rubber sheet are shown in Table 1. These vulcanization conditions were determined by means of an adequate rheometer. Vulcanization had been carried out for an optimum cure period.

The two-stage continuous vulcanization without the change in pressure as shown in Table 1 is now explained. An H-NBR was vulcanized at a lower temperature under vulcanization conditions of a non-organic-peroxide-addition system. Then, press temperature was raised up to 170°C. High-temperature pressurization was carried out under conditions for the polymerization of a metal salt of an unsaturated carboxylic acid.

A V-ribbed belt A that has a rib rubber layer 5 formed by a vulcanized rubber component in accordance with the present invention was made. Plural tensile members 1 are embedded into an adhesion rubber layer 2. Formed integrally on one surface of the adhesion rubber layer 2 is a rubber coated rib fabric 3. Formed integrally on the other surface of the adhesive rubber layer 2 is a rib rubber layer 5 having thereon three ribs 4. The results of running testing of this V-ribbed belt A are shown in Table 1.

In the running testing, the belt, wound around a driving pulley having a diameter of 120 mm, around a driven pulley having a diameter of 120 mm, and around an idler pulley having a diameter of 70 mm, was run in an 85°C atmosphere (driven pulley load: 16 h.p.; set weight (tensile): 85 kgf; driving puller revolution: 4,900 rpm).

4

## TABLE 1

| | Present Invention's Examples | | | | |
|---|---|---|---|---|---|
| | **1** | **2** | **3** | **4** | **5** |
| Recipe (parts by weight) | | | | | |
| (1)H-NBR* | 100 | 100 | 100 | 100 | 100 |
| (2)zinc methacrylate** | 15 | 33 | 33 | 50 | 90 |
| (3)sulphur | 1 | 0.5 | 1 | 1 | 1 |
| (4)vul. accelerator | 3 | 3 | 3 | 3 | 3 |
| (5)organic peroxide*** | 2.5 | 0.7 | 0.7 | 1.1 | 0.7 |
| Vulcanization Conditions | | | | | |
| lower-temp. vul. | 145 ℃ ×40 minutes (all examples) | | | | |
| high-temp. vul. | 170 ℃ ×20 minutes (all examples) | | | | |
| Physical Properties | | | | | |
| (a)tensile strength(MPa) | 36 | 37 | 40 | 38 | 34 |
| (b)fracture elongation(%) | 530 | 510 | 480 | 260 | 210 |
| (c)modulus E' 25 ℃( ×10^7 MPa) | 50 | 118 | 125 | 400 | 1800 |
| (d)modulus E' 100 ℃( ×10^7 MPa) | 43 | 103 | 113 | 352 | 1540 |
| (e)(d)/(c) | 0.86 | 0.87 | 0.90 | 0.88 | 0.86 |
| (f)compression set(%) | 39 | 38 | 36 | 39 | 44 |
| (g)De Mattia flex fatigue test(times)**** | 14000 | 23000 | 18000 | 12000 | 9000 |
| Belt Lifetime (hr) | 270 | 240 | 250 | 210 | 170 |

\* Zetpol: 2020; hydrogenation rate: 90%; acrylonitrile: 37%; manufactured by Nippon Zeon Co., Ltd.
\*\* Actor ZMA manufactured by Kawaguchi Kagaku K.K.
\*\*\* 2,5-Dimethylhexane-2,5-di(t-butylperoxy) hexane-3
\*\*\*\* stroke: 19-75 mm; 2mm cut growth; the frequency of fracture occurrence

## TABLE 1(continued)

| Prior Art's Examples | 1 | 2 | 3 | 4 | 5 |
|---|---|---|---|---|---|
| Recipe (parts by weight) | | | | | |
| (1)H-NBR* | 100 | 100 | 100 | 100 | 100 |
| (2)zinc methacrylate** | 33 | 33 | 33 | 33 | 50 |
| (3)sulphur | | 1 | 1 | 1 | |
| (4)vul. accelerator | | 3 | 3 | 3 | |
| (5)organic peroxide***2.9 | | | 0.7 | 0.7 | 3.3 |

Vulcanization Conditions
lower-temp. vul.   145 ℃ × 40 minutes (Examples 2 & 3)

high-temp. vul.   170 ℃ × 60 minutes (Examples 1 & 5);
                  170 ℃ × 20 minutes (Example 4)

| Physical Properties | 1 | 2 | 3 | 4 | 5 |
|---|---|---|---|---|---|
| (a)tensile strength(MPa) | 34 | 19 | 28 | 32 | 31 |
| (b)fracture elongation(%) | 370 | 560 | 550 | 570 | 180 |
| (c)modulus E' 25 ℃( ×10$^7$MPa) | 124 | 167 | 93 | 97 | 431 |
| (d)modulus E' 100 ℃( ×10$^7$MPa) | 114 | 70 | 74 | 70 | 370 |
| (e)(d)/(c) | 0.92 | 0.42 | 0.74 | 0.72 | 0.86 |
| (f)compression set(%) | 32 | 53 | 50 | 54 | 36 |
| (g)De Mattia flex fatigue test(times)**** | 3000 | 5000 | 5000 | 50000 | 1000 |

| Belt Lifetime (hr) | 85 | 100 | 120 | 210 | 50 |
|---|---|---|---|---|---|

\* Zetpol: 2020; hydrogenation rate: 90%; acrylonitrile: 37;
        manufactured by Nippon Zeon Co., Ltd.
\*\* Actor ZMA manufactured by Kawaguchi Kagaku K.K.
\*\*\* 2,5-Dimethylhexane-2,5-di(t-butylperoxy) hexane-3
\*\*\*\* stroke: 19-75 mm; 2mm cut growth;
        the frequency of fracture occurrence

## TABLE 1(continued)

```
---------------------------------------------------------------
Prior Art's Examples
                                        6        7         8
---------------------------------------------------------------
Recipe (parts by weight)
(1)H-NBR*                              100      100       100
(2)zinc
    methacrylate**                      50        8       120
(3)sulphur                              1         1         1
(4)vul. accelerator                     3         3         3
(5)organic peroxide***                 0.7       0.7       0.7
---------------------------------------------------------------
Vulcanization Conditions
lower-temp. vul.        145 ℃ × 40minutes (Examples 7 & 8)

high-temp. vul.         170 ℃ × 20minutes (all examples)
---------------------------------------------------------------
 Physical Properties
(a)tensile strength(MPa)        29        25        30
(b)fracture elongation(%)      300       560       150
(c)modulus E'
    25 ℃( ×10⁷MPa)             320        32       3300
(d)modulus E'
    100 ℃( ×10⁷MPa)            200        28       2570
(e) (d)/(c)                    0.62      0.87       0.77
(f)compression set(%)           43        35        52
(g)De Mattia flex fatigue
    test (times)****          13000     28000      4000
---------------------------------------------------------------
 Belt Lifetime (hr)            150        30        95
---------------------------------------------------------------
```

\* Zetpol: 2020; hydrogenation rate: 90%; acrylonitrile: 37%;
       manufactured by Nippon Zeon Co., Ltd.
\*\* Actor ZMA manufactured by Kawaguchi Kagaku K.K.
\*\*\* 2,5-Dimethylhexane-2,5-di(t-butylperoxy) hexane-3
\*\*\*\* stroke: 19-75 mm; 2mm cut growth;
       the frequency of fracture occurrence

The physical properties of a vulcanized rubber composition in accordance with the present invention was superior to those of a conventional vulcanized rubber composition. Additionally, the V-ribbed belt A of the invention has a longer running life.

**EXAMPLE 2**

A vulcanized rubber composition was obtained by kneading an unvulcanized rubber composition whose matrix rubber is NR, NBR, or EPDM with a Banbury mixer and by subjecting the same to press cure under vulcanization conditions of Table 2. The physical properties of this vulcanized rubber composition are shown in Table 2. Vulcanization conditions and the requirements of belt running testing are the same as Example 1.

## TABLE 2

| Present Invention's Examples | 1 | 2 | 3 |
|---|---|---|---|
| Recipe (parts by weight) | | | |
| (1)NR* | 100 | | |
| (2)NBR** | | 100 | |
| (3)EPDM*** | | | 100 |
| (4)zinc methacrylate**** | 33 | 33 | 33 |
| (5)sulphur | 2 | 1.5 | 1.5 |
| (6)vul. accelerator | 0.8 | 2 | 1 |
| (7)organic peroxide***** | 0.7 | 0.7 | 0.7 |

Vulcanization Conditions
lower-temp. vul.      145 ℃ × 30minutes (Examples 1 & 3)
                      145 ℃ × 50minutes (Example 2)

high-temp. vul.       170 ℃ × 20minutes (all examples)

| Physical Properties | | | |
|---|---|---|---|
| (a)tensile strength (MPa) | 30 | 33 | 28 |
| (b)fracture elongation(%) | 550 | 490 | 540 |
| (c)modulus E' 25 ℃( ×10$^7$MPa) | 109 | 111 | 135 |
| (d)modulus E' 100 ℃( ×10$^7$MPa) | 88 | 92 | 120 |
| (e)(d)/(c) | 0.81 | 0.83 | 0.89 |
| (f)compression set(%) | 45 | 37 | 23 |
| (g)De Mattia flex fatigue test (times)****** | 90000 | 21000 | 24000 |
| Belt Lifetime (hr) | 200 | 240 | 260 |

```
      * RSS #3
     ** N230S manufactured by Nihon Gosei Gomu K.K.
    *** EP24  manufactured by Nihon Gosei Gomu K.K.
   **** Actor ZMA manufactured by Kawaguchi Kagaku K.K.
  ***** 2,5-Dimethylhexane-2,5-di(t-butylperoxy) hexane-3
 ****** stroke: 19-75 mm; 2mm cut growth;
             the frequency of fracture occurrence
```

## TABLE 2 (continued)

Prior Art's Examples

|                              | 1    | 2    | 3    |
|------------------------------|------|------|------|
| Recipe (parts by weight)     |      |      |      |
| (1)NR*                       | 100  | 100  |      |
| (2)NBR**                     |      |      | 100  |
| (3)EPDM***                   |      |      |      |
| (4)zinc methacrylate****     | 33   | 33   | 33   |
| (5)sulphur                   | 2    | 2    | 1.5  |
| (6)vul. accelerator          | 0.8  | 0.8  | 2    |
| (7)organic peroxide*****     | 0.7  | 0.7  | 0.7  |

Vulcanization Conditions

lower-temp. vul.    145 ℃ × 30minutes (Ex.1)
                    145 ℃ × 50minutes (Ex.3)

high-temp. vul.    170 ℃ × 20minutes (Ex.2)

| Physical Properties              | 1     | 2      | 3     |
|----------------------------------|-------|--------|-------|
| (a)tensile strength(MPa)         | 25    | 27     | 22    |
| (b)fracture elongation(%)        | 570   | 620    | 500   |
| (c)modulus E'                    |       |        |       |
|   25 ℃( ×$10^7$MPa)    | 114   | 93     | 123   |
| (d)modulus E'                    |       |        |       |
|   100 ℃( ×$10^7$MPa)   | 60    | 48     | 84    |
| (e)(d)/(c)                       | 0.53  | 0.52   | 0.68  |
| (f)compression set(%)            | 60    | 72     | 40    |
| (g)De Mattia flex fatigue        |       |        |       |
|   test******           | 72000 | 100000 | 13000 |
| Belt Lifetime (hr)               | 60    | 65     | 150   |

    * RSS #3
   ** N230S manufactured by Nihon Gosei Gomu K.K.
  *** EP24  manufactured by Nihon Gosei Gomu K.K.
 **** Actor ZMA manufactured by Kawaguchi Kagaku K.K.
 ***** 2,5-Dimethylhexane-2,5-di(t-butylperoxy) hexane-3
****** stroke: 19-75 mm; 2mm cut growth;
        a number of times of fracture

## TABLE 2 (continued)

```
-------------------------------------------------------------------
Prior Art's Examples
                                        4          5          6
-------------------------------------------------------------------
Recipe (parts by weight)
(1)NR*
(2)NBR**                               100
(3)EPDM***                                        100        100
(4)zinc methacrylate****                33         33         33
(5)sulphur                             1.5        1.5        1.5
(6)vul. accelerator                     2          1          1
(7)organic peroxide*****               0.7        0.7        0.7
-------------------------------------------------------------------
Vulcanization Conditions
lower-temp. vul.        145 ℃ × 30minutes (Ex.5)

high-temp. vul.        170 ℃ × 20minutes (Examples. 4 & 6)
-------------------------------------------------------------------
Physical Properties
(a)tensile strength(MPa)                29         17         24
(b)fracture elongation(%)              530        600        630
(c)modulus E'
     25 ℃( ×10⁷MPa)                    102        148        119
(d)modulus E'
    100 ℃( ×10⁷MPa)                     63        114         85
(e)(d)/(c)                            0.61       0.77       0.71
(f)compression set(%)                   47         31         42
(g)De Mattia flex fatigue
     test(times)******                40000      26000      47000
-------------------------------------------------------------------
Belt Lifetime (hr)                     220        170        230
-------------------------------------------------------------------
      * RSS #3
     ** N230S manufactured by Nihon Gosei Gomu K.K.
    *** EP24  manufactured by Nihon Gosei Gomu K.K.
   **** Actor ZMA manufactured by Kawaguchi Kagaku K.K.
  ***** 2,5-Dimethylhexane-2,5-di(t-butylperoxy) hexane-3
 ****** stroke: 19-75 mm; 2mm cut growth;
              the frequency of fracture occurrence
```

The physical properties of vulcanized rubber compositions in accordance with the present invention were superior to those of other conventional vulcanized rubber compositions. Additionally, the V-ribbed belt A of the invention has a longer running life.

The foregoing examples have been described by taking a V-ribbed belt as example. This, however, is not to be considered restrictive. The present invention is available for other types of products such as transmission belts, conveyor belts, high-pressure hoses.

**Claims**

**1.** A process of producing a vulcanized rubber composition, said process comprising the steps of:

(A) heating an unvulcanized rubber composition containing: (1) 100 parts by weight of a sulphur vulcanizable rubber; (2) 10 to 100 parts by weight of a metal salt of an unsaturated carboxylic acid; (3) 0.2 to 5.0 parts by weight of an organic peroxide whose half-life is 1 minute at temperatures above 170°C; and (4) 0.5 to 3.0 parts by weight of a sulphur component, per 100 parts by weight of said sulphur vulcanizable rubber, in a lower-temperature range within which said organic peroxide does not decompose, and
(B) following Step A, continuously heating said composition in a higher-temperature range within which said organic peroxide decomposes.

2. The process as in claim 1, wherein said sulphur vulcanizable rubber is a hydrogenated rubber formed by an ethylene unsaturated nitrile-conjugated diene type copolymer.

3. The process as in claim 1, wherein said sulphur vulcanizable rubber is a hydrogenated rubber formed by an ethylene unsaturated nitrile-conjugated diene type copolymer, and wherein the ratio of said hydrogenated rubber (abbreviated R) to said metal salt of said unsaturated carboxylic acid (abbreviated S) is:

$100/100 \geqq R/S \geqq 100/15$.

4. The process as in claim 1, wherein said lower-temperature range within which said organic peroxide does not discompose is a temperature range from 130 to 145°C, whereas said higher-temperature range within which said organic peroxide discomposes is a temperature range from 160 to 180°C.

FIG. 1